# EUROPEAN PATENT APPLICATION

(11) **EP 4 764 948 A1**
(43) Date of publication of application: **24.06.2026**
(21) Application number: 23949137.6
(22) Date of filing: 14.08.2023
(51) Int. Cl.: G06N 3/04

(54) **DATA SELECTION PROGRAM, INFORMATION PROCESSING DEVICE, AND DATA SELECTION METHOD**

(71) Applicant: FUJITSU LIMITED, Kawasaki-shi, Kanagawa 211-8588 (JP)
(72) Inventor: OKAJIMA, Seiji, Kawasaki-shi, Kanagawa 211-8588 (JP)
(74) Representative: Hoffmann Eitle
(86) International application number: PCT/JP2023/029442
(87) International publication number: WO 2025/037367

(57) **Abstract**

A data selection program that causes a computer to execute a process including determining, for each of a plurality of pieces of graph structure data, a weight in data selection based on the number of adjacent nodes shared by two nodes for a set of the two nodes included in the graph structure data, and selecting training data to be used for training a neural network that predicts a presence or absence of a link between nodes included in the graph structure data input as input data from among the plurality of pieces of graph structure data based on the determined weight and information indicating a presence or absence of a link between nodes for each of one or more sets of two nodes.

## Description

### [Technical Field]

The present embodiment relates to a data selection program, an information processing apparatus, and a data selection method.

### [Background Art]

In the field of graph artificial intelligence (AI), there is link prediction, which is a technology for predicting the presence or absence of a link between a certain pair of nodes included in graph data.

Fig. 1 is a diagram for describing the link prediction.

In a case where there is a node group as indicated by reference sign A1, the link prediction as indicated by reference sign A2 is performed. For example, in a case where there is no link indicated by reference sign A21, it is predicted that there is a link indicated by reference sign A22.

Fig. 2 is a diagram for describing link prediction by a graph convolutional network (GCN).

As indicated by reference sign B1, each node is assigned a distributed representation x. As indicated by reference sign B2, a latent variable h of each node is calculated by convolution processing executed by the GCN. Then, as indicated by reference sign B3, the presence or absence of the link is predicted using the inner product of latent variables hᵢ and hⱼ as a feature of the link (i,j).

In training of a weight matrix by the GCN (in other words, error backpropagation), when the link (i,j) existing in an input graph is a positive example, the weight matrix W of the GCN is updated such that hi·hj approaches 1. On the other hand, when a link (i',j') that does not exist in the input graph is a negative example, the weight matrix W of the GCN is updated such that hᵢ' ·hⱼ' approaches 0.

The GCN part can be replaced with not only the original GCN but also other GCN-based methods (such as GraphSAGE and graph attention network (GAT)).

External knowledge (in other words, information regarding a link that is known to exist or not exist) may be used for the link prediction. Node embeddings of the external knowledge are calculated and used for the link prediction. An embedding vector is given as a distributed node representation of an input of the link prediction.

### [Prior Art Reference]

### [Non-Patent Document]

[Non Patent Document 1]
Thomas N. Kipf, MaxWelling, "Variational Graph Auto-Encoders", 2016.11.21

### [Summary of Invention]

### [Problems to be Solved by Invention]

However, since many node embedding methods calculate a distributed representation of each node based on a transition probability between nodes, in a case where the external knowledge is insufficient, an external knowledge graph may be disconnected and split into a large number of parts, and thus, there is a possibility that node embeddings are not calculated properly.

In one aspect, an object is to improve accuracy of verification and discovery of a relationship between nodes.

### [Means to Solve the Problem]

According to an aspect of the embodiments, a data selection program that causes a computer to execute a process including determining, for each of a plurality of pieces of graph structure data, a weight in data selection based on the number of adjacent nodes shared by two nodes for a set of the two nodes included in the graph structure data, and selecting training data to be used for training a neural network that predicts a presence or absence of a link between nodes included in the graph structure data input as input data from among the plurality of pieces of graph structure data based on the determined weight and information indicating a presence or absence of a link between nodes for each of one or more sets of two nodes.

### [Effect of Invention]

In one aspect, it is possible to improve accuracy of verification and discovery of a relationship between nodes.

### [Brief Description of Drawings]

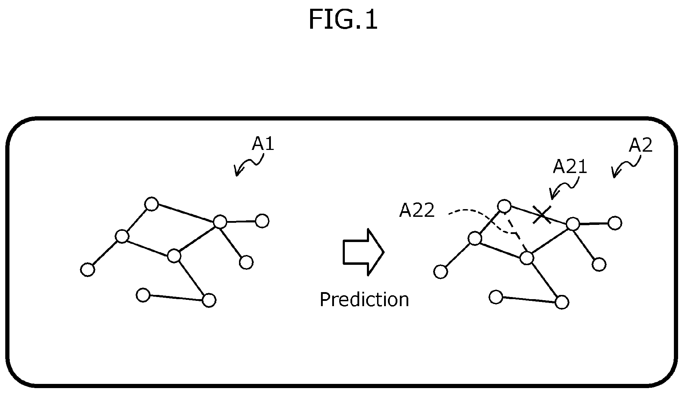

Fig. 1 is a diagram for describing link prediction;

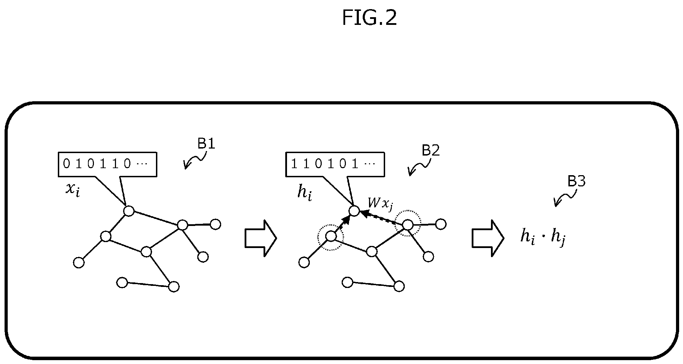

Fig. 2 is a diagram for describing link prediction by a graph convolutional network (GCN);

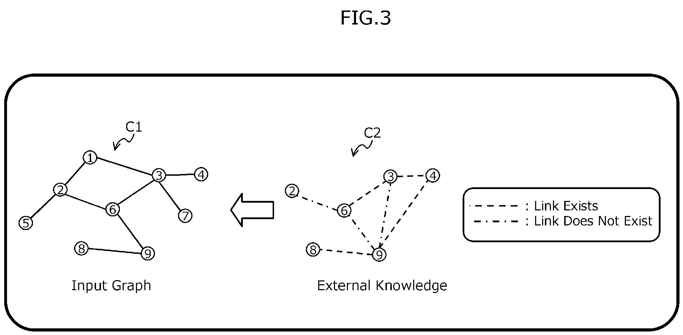

Fig. 3 is a diagram for describing processing of using external knowledge for selection of a positive example and a negative example at the time of training the GCN in an embodiment;

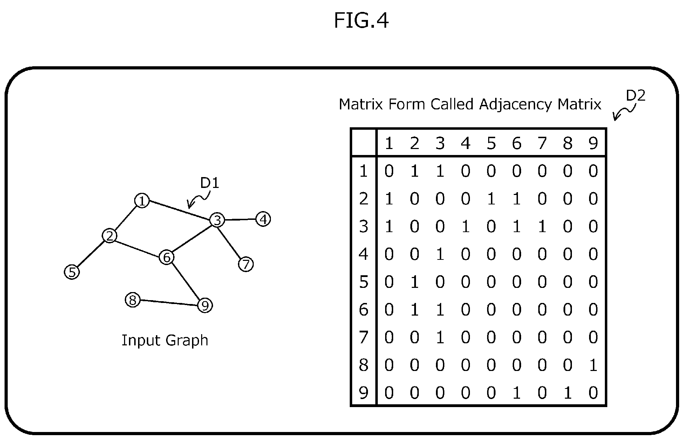

Fig. 4 is a diagram for describing a data representation of a graph;

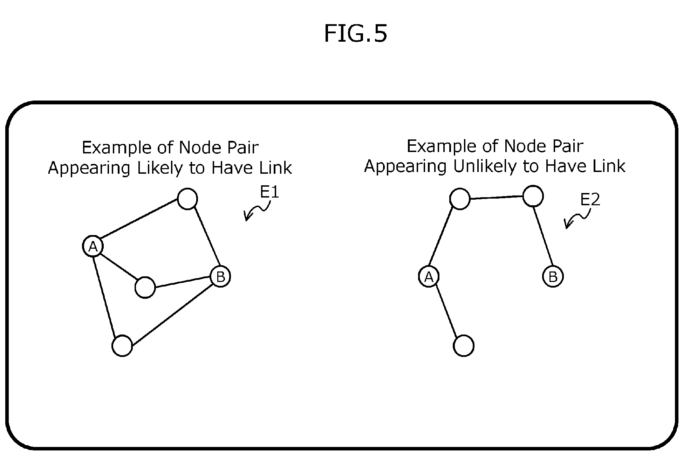

Fig. 5 is a diagram illustrating a feature of a node pair;

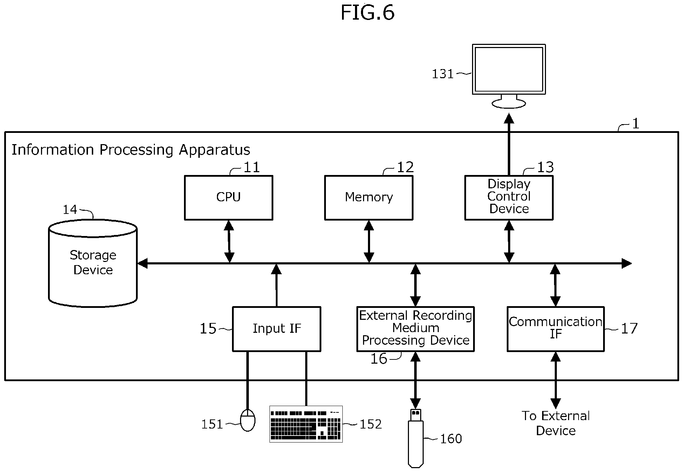

Fig. 6 is a block diagram schematically illustrating a hardware configuration example of an information processing apparatus in the embodiment;

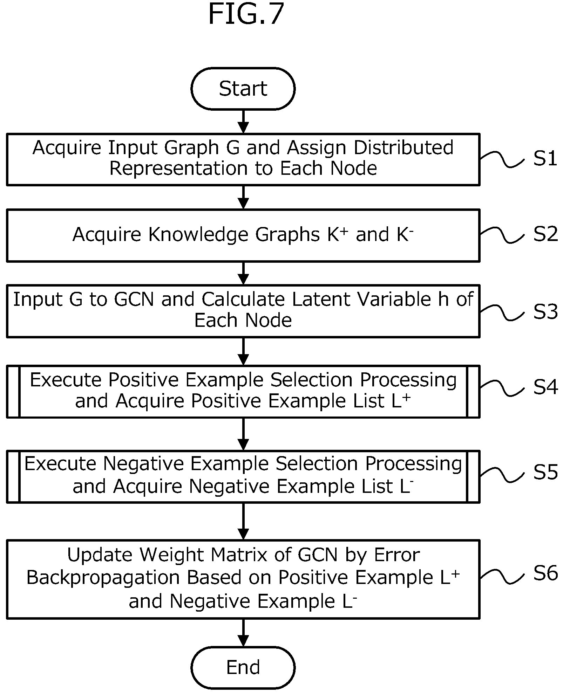

Fig. 7 is a flowchart illustrating link prediction processing in the embodiment; and

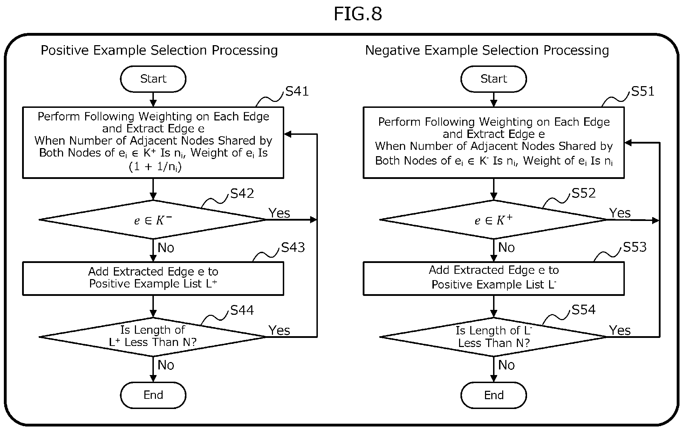

Fig. 8 is a flowchart illustrating details of positive example selection processing and negative example selection processing illustrated in Fig. 7.

### [Description of Embodiments]

### [A] Embodiment

Hereinafter, an embodiment will be described with reference to the drawings. However, the embodiment described below is merely an example, and there is no intention to exclude the application of various modifications and techniques that are not explicitly described in the embodiment. That is, the present embodiment can be variously modified and implemented without departing from the gist thereof. In addition, each drawing is not intended to include only the components illustrated in the drawing but may include other components and the like.

### [A-1] Configuration Example

Fig. 3 is a diagram for describing processing of using external knowledge for selection of a positive example and a negative example at the time of training a graph convolutional network (GCN) in the embodiment.

As illustrated in Fig. 3, in link prediction, external knowledge (in other words, information regarding a link that is known to exist or not exist) indicated by reference sign C2 may be used for an input graph indicated by reference sign C1. In the external knowledge indicated by reference sign C2, a broken line indicates that a link exists, and a line with alternating long and short dashes indicates that no link exists.

Node embeddings of the external knowledge are calculated and used for the link prediction. For the node embeddings, for example, DeepWalk, node2vec, and TransE-based methods may be used. An embedding vector is given as a distributed node representation of an input of the link prediction.

The link prediction may be used for, for example, gene network verification/prediction, social networking service (SNS) user recommendation, and product recommendation.

In the gene network verification/prediction, a node is associated with a gene, a link is associated with a regulatory relationship in gene expression, and the regulatory relationship in gene expression is predicted. The gene expression indicates that a protein or the like is produced from a gene. Elucidation of a mechanism of the gene expression involved in various biological phenomena leads to drug development and the like.

In the SNS user recommendation, a node is associated with a user, a link is associated with a follow relationship or the like, and a friend/follow relationship is predicted. Then, other users in which a certain user is likely to be interested are predicted and recommended.

In the product recommendation, a node is associated with a user/product, a link is associated with a follow relationship between users, a purchase relationship between a user and a product, and the like, and a product that the user is likely to purchase is predicted and recommended.

Fig. 4 is a diagram for describing a data representation of a graph.

In Fig. 4, a matrix form called an adjacency matrix indicated by reference sign D2 is expressed for an input graph indicated by reference sign D1.

In the matrix form called the adjacency matrix, the matrix is expressed as a matrix in which an element between vertices that are adjacent to each other (in other words, a link exists between the vertices) is 1 and an element between vertices that are not adjacent to each other is 0.

In the matrix form indicated by reference sign D2 in Fig. 4, for example, elements of nodes 2 and 3 for node 1 are set to 1, which indicates that a node is set therebetween, and elements of nodes 1, 5, and 6 for node 2 are set to 1, which indicates that a node is set therebetween.

Many node embedding methods calculate a distributed representation of each node based on a transition probability between nodes. In a case where the external knowledge is not sufficient, an external knowledge graph is disconnected and split into a large number of parts. In a case where the external knowledge graph is disconnected and split into a large number of parts, many of the transition probabilities between the nodes become 0, and thus, there is a possibility that the node embeddings are not calculated properly and the knowledge is not reflected in the link prediction.

Therefore, in the present embodiment, the external knowledge is used to select the positive example and the negative example at the time of training the GCN.

A link that is known not to exist is not selected as the positive example. In the example illustrated in Fig. 3, a link (2,6) is a link included in the input graph, but is not selected as the positive example.

On the other hand, an edge that is known to exist is not selected as the negative example. In the example illustrated in Fig. 3, a link (4,9) is not selected as the negative example since it is clear from the external knowledge that the link (4,9) exists.

Due to constraints of the external knowledge, the selection of the positive example and the negative example becomes accurate, and improvement in prediction accuracy is expected.

In addition, a hard positive and a hard negative may be considered for the link prediction. The hard positive is a node pair having a link despite appearing structurally unlikely to have a link, and the hard negative is a node pair having no link despite appearing structurally likely to have a link.

In the GCN, a latent variable is calculated such that a distance between features of adjacent nodes (in other words, the link) becomes short. As a node pair shares more adjacent nodes, a distance between the nodes becomes more likely to be smaller (in other words, the node pair is more likely to be predicted as having a link) Therefore, prediction for a node pair that shares many adjacent nodes but has no link or a node pair that shares few adjacent nodes but has a link is likely to be erroneously performed. Then, it is possible to improve the prediction accuracy by selecting a node pair with a high likelihood of prediction error as learning data.

Therefore, in weighted sampling of the learning data, a node pair that shares many adjacent nodes and has no link therebetween is more likely to be selected as the negative example, while a node pair that shares few or no adjacent nodes and has a link therebetween is more likely to be selected as the positive example.

Fig. 5 is a diagram illustrating the feature of the node pair.

In Fig. 5, in an example of a node pair that is likely to have a link, which is indicated by reference sign E1, nodes A and B share three adjacent nodes. On the other hand, in an example of a node pair that is unlikely to have a link, which is indicated by reference sign E2, nodes A and B do not share adjacent nodes.

Fig. 6 is a block diagram schematically illustrating a hardware configuration example of an information processing apparatus 1 in the embodiment.

As illustrated in Fig. 6, the information processing apparatus 1 is an example of a computer, and includes a central processing unit (CPU) 11, a memory 12, a display control device 13, a storage device 14, an input interface (IF) 15, an external recording medium processing device 16, and a communication IF 17.

The memory 12 is an example of a storage unit, and is, for example, a read only memory (ROM) or a random access memory (RAM). A program such as Basic Input/Output System (BIOS) may be written into the ROM of the memory 12. A software program of the memory 12 may be appropriately read and executed by the CPU 11. In addition, the RAM of the memory 12 may be used as a temporary recording memory or a working memory.

The display control device 13 is connected to a display device 131 and controls the display device 131. The display device 131 is a liquid crystal display, an organic light-emitting diode (OLED) display, a cathode ray tube (CRT), an electronic paper display, or the like, and displays various types of information to an operator or the like. The display device 131 may be combined with an input device, and may be, for example, a touch panel. The display device 131 displays various types of information to a user of the information processing apparatus 1.

The storage device 14 is a storage device having high IO performance, and for example, a dynamic random access memory (DRAM), a solid state drive (SSD), a storage class memory (SCM), or a hard disk drive (HDD) may be used.

The input IF 15 may be connected to an input device such as a mouse 151 or a keyboard 152 and control the input device such as the mouse 151 or the keyboard 152. The mouse 151 and the keyboard 152 are examples of the input devices, and the operator performs various input operations via the input devices.

The external recording medium processing device 16 is configured such that a recording medium 160 can be mounted. The external recording medium processing device 16 is configured to be able to read information recorded on the recording medium 160 in a state in which the recording medium 160 is mounted. In this example, the recording medium 160 has portability. For example, the recording medium 160 is a non-transitory recording medium such as a flexible disk, an optical disk, a magnetic disk, a magnetooptical disk, or a semiconductor memory.

The communication IF 17 is an interface that enables communication with an external device.

The CPU 11 is an example of a processor, and is a processing device that performs various controls and computations. The CPU 11 implements various functions by executing an operating system (OS) and a program read into the memory 12. Note that the CPU 11 may be a multiprocessor including a plurality of CPUs, a multi-core processor including a plurality of CPU cores, or a configuration including a plurality of multi-core processors.

The device that controls the overall operation of the information processing apparatus 1 is not limited to the CPU 11 and may be, for example, any one of an MPU, a DSP, an ASIC, a PLD, and an FPGA. Furthermore, the device that controls the overall operation of the information processing apparatus 1 may be a combination of two or more of the CPU, the MPU, the DSP, the ASIC, the PLD, and the FPGA. Note that the MPU is an abbreviation for microprocessing unit, DSP is an abbreviation for digital signal processor, and ASIC is an abbreviation for application specific integrated circuit. In addition, PLD is an abbreviation for programmable logic device, and FPGA is an abbreviation for field programmable gate array.

The information processing apparatus 1 performs GCN training for the link prediction according to the following procedures (1) to (5). The input graph is represented by G(v,e), the knowledge graph (with a link) is represented by K⁺(v⁺,e⁺), and the knowledge graph (without a link) is represented by K⁻(v⁻,e⁻). v represents a node, and e represents an edge (in other words, a link).
(1) The information processing apparatus 1 acquires the input graph G and assigns the distributed representation to each node.
(2) The information processing apparatus 1 acquires the knowledge graphs K⁺ and K⁻.
(3) The information processing apparatus 1 inputs G to the GCN and calculates the latent variable h of each node.
(4) The information processing apparatus 1 performs positive example and negative example sampling. e is extracted by weighted random sampling. For the positive example, when the number of adjacent nodes shared by both nodes of eᵢ ∈ K⁺ is nᵢ, a weight of eᵢ is (1 + 1/nᵢ). For the negative example, when the number of adjacent nodes shared by both nodes of eᵢ ∈ K⁻ is nᵢ, the weight of eᵢ is nᵢ. In a case where e ∈ K⁻ is extracted at the time of extraction of the positive example and e ∈ K⁺ is extracted at the time of extraction of the negative example, resampling is performed without selecting the positive example and the negative examples.
(5) The information processing apparatus 1 updates a weight matrix of the GCN by error backpropagation based on the positive example and the negative example.

### [A-2] Operation Example

Link prediction processing in the embodiment will be described with reference to the flowchart (steps S1 to S17) illustrated in Fig. 7.

The information processing apparatus 1 acquires the input graph G and assigns the distributed representation to each node (step S1).

The information processing apparatus 1 acquires the knowledge graphs K⁺ and K⁻ (step S2).

The information processing apparatus 1 inputs G to the GCN and calculates the latent variable h of each node (step S3).

The information processing apparatus 1 executes positive example selection processing and acquires a positive example list L⁺ (step S4). Note that details of the positive example selection processing in step S4 are described below with reference to Fig. 8.

The information processing apparatus 1 executes negative example selection processing and acquires a negative example list L⁻ (step S5). Note that details of the negative example selection processing in step S5 are described below with reference to Fig. 8.

The information processing apparatus 1 updates the weight matrix of the GCN by error backpropagation based on the positive example L⁺ and the negative example L⁻ (step S6). Then, the link prediction processing ends.

Next, details of the positive example selection processing (step S4) illustrated in Fig. 7 will be described according to the flowchart (steps S41 to S44) illustrated in Fig. 8.

The information processing apparatus 1 performs the following weighting on each edge and extracts the edge e (step S41). When the number of adjacent nodes shared by both nodes of eᵢ ∈ K⁺ is nᵢ, the weight of eᵢ is (1 + 1/nᵢ).

The information processing apparatus 1 determines whether or not e ∈ K⁻ holds (step S42).

In a case where e ∈ K⁻ holds (Yes in step S42), the processing returns to step S41.

In a case where e ∈ K⁻ does not hold (No in step S42), the information processing apparatus 1 adds the extracted edge e to the positive example list L⁺ (step S43).

The information processing apparatus 1 determines whether or not a length of L⁺ is less than N (step S44).

In a case where the length of L⁺ is less than N (Yes in step S44), the processing returns to step S41.

In a case where the length of L⁺ is not less than N (No in step S44), the positive example selection processing ends.

Next, details of the negative example selection processing (step S5) illustrated in Fig. 7 will be described according to the flowchart (steps S51 to S54) illustrated in Fig. 8.

The information processing apparatus 1 performs the following weighting on each edge and extracts the edge e (step S51). When the number of adjacent nodes shared by both nodes of eᵢ ∈ K⁻ is nᵢ, the weight of eᵢ is nᵢ.

The information processing apparatus 1 determines whether or not e ∈ K⁺ holds (step S52).

In a case where e ∈ K⁺ holds (Yes in step S52), the processing returns to step S51.

In a case where e ∈ K⁺ does not hold (No in step S52), the information processing apparatus 1 adds the extracted edge e to the positive example list L⁻ (step S53).

The information processing apparatus 1 determines whether or not a length of L⁻ is less than N (step S54).

In a case where the length of L⁻ is less than N (Yes in step S54), the processing returns to step S51.

In a case where the length of L⁻ is not less than N (No in step S54), the positive example selection processing ends.

### [B] Effects

With the data selection program, the information processing apparatus, and the data selection method in the above-described embodiment, for example, the following operational effects can be obtained.

For each of a plurality of pieces of graph structure data, the information processing apparatus 1 determines a weight in data selection based on the number of adjacent nodes shared by two nodes for a set of the two nodes included in the graph structure data. The information processing apparatus 1 selects training data to be used for training a neural network that predicts the presence or absence of a link between nodes included in the graph structure data input as input data from among the plurality of pieces of graph structure data based on the determined weight and information indicating the presence or absence of a link between nodes for each of one or more sets of two nodes.

As a result, it is possible to improve accuracy of verification and discovery of a relationship between nodes.

In a case where a link exists between two nodes of which the number of sharing adjacent nodes is less than a predetermined number or which share no adjacent nodes, the information processing apparatus 1 selects the two nodes as the positive example. In a case where a link exists between two nodes of which the number of sharing adjacent nodes is equal to or larger than the predetermined number, the information processing apparatus 1 selects the two nodes as the negative example. The information processing apparatus 1 updates a weight matrix of the neural network by error backpropagation based on the nodes selected as the positive example and the negative example.

As a result, by restricting the positive example and the negative example to be selected by the external knowledge, the selection becomes accurate, and improvement in accuracy is expected. In addition, by selecting a node pair with a high likelihood of prediction error from the external knowledge as the learning data, improvement in accuracy is expected.

### [C] Others

The disclosed technology is not limited to the above-described embodiment, and various modifications can be made without departing from the gist of the present embodiment. Each configuration and each step of processing of the present embodiment can be selected or omitted as needed or may be appropriately combined.

### [Reference Signs List]

1 Information processing apparatus
11 CPU
12 Memory
13 Display control device
14 Storage device
15 Input IF
16 External recording medium processing device
17 Communication IF
131 Display device
151 Mouse
152 Keyboard
160 Recording medium

## Claims

1. A data selection program that causes a computer to execute a process comprising:
determining, for each of a plurality of pieces of graph structure data, a weight in data selection based on the number of adjacent nodes shared by two nodes for a set of the two nodes included in the graph structure data; and
selecting training data to be used for training a neural network that predicts a presence or absence of a link between nodes included in the graph structure data input as input data from among the plurality of pieces of graph structure data based on the determined weight and information indicating a presence or absence of a link between nodes for each of one or more sets of two nodes.

2. The data selection program according to claim 1, the program causing a computer to execute a process comprising:
selecting, in a case where a link exists between the two nodes of which the number of sharing adjacent nodes is less than a predetermined number or which share no adjacent nodes, the two nodes as a positive example;
selecting, in a case where a link exists between the two nodes of which the number of sharing adjacent nodes is equal to or more than the predetermined number, the two nodes as a negative example; and
updating a weight matrix of the neural network by error backpropagation based on the nodes selected as the positive example and the negative example.

3. An information processing apparatus comprising a processor configured to:
determine, for each of a plurality of pieces of graph structure data, a weight in data selection based on the number of adjacent nodes shared by two nodes for a set of the two nodes included in the graph structure data; and
select training data to be used for training a neural network that predicts a presence or absence of a link between nodes included in the graph structure data input as input data from among the plurality of pieces of graph structure data based on the determined weight and information indicating a presence or absence of a link between nodes for each of one or more sets of two nodes.

4. The information processing apparatus according to claim 3, wherein
the processor is configured to:
select, in a case where a link exists between the two nodes of which the number of sharing adjacent nodes is less than a predetermined number or which share no adjacent nodes, the two nodes as a positive example;
select, in a case where a link exists between the two nodes of which the number of sharing adjacent nodes is equal to or more than the predetermined number, the two nodes as a negative example; and
update a weight matrix of the neural network by error backpropagation based on the nodes selected as the positive example and the negative example.

5. A data selection method in which a computer executes a process comprising:
determining, for each of a plurality of pieces of graph structure data, a weight in data selection based on the number of adjacent nodes shared by two nodes for a set of the two nodes included in the graph structure data; and
selecting training data to be used for training a neural network that predicts a presence or absence of a link between nodes included in the graph structure data input as input data from among the plurality of pieces of graph structure data based on the determined weight and information indicating a presence or absence of a link between nodes for each of one or more sets of two nodes.

6. The data selection method according to claim 5, wherein
the computer executes a process comprising:
selecting, in a case where a link exists between the two nodes of which the number of sharing adjacent nodes is less than a predetermined number or which share no adjacent nodes, the two nodes as a positive example;
selecting, in a case where a link exists between the two nodes of which the number of sharing adjacent nodes is equal to or more than the predetermined number, the two nodes as a negative example; and
updating a weight matrix of the neural network by error backpropagation based on the nodes selected as the positive example and the negative example.
